# EUROPEAN PATENT APPLICATION

(11) **EP 3 206 257 A1**
(43) Date of publication of application: **16.08.2017**
(21) Application number: 15849330.4
(22) Date of filing: 12.08.2015
(51) Int. Cl.: H01R 4/02, B60J 1/00, B60S 1/02, H05K 1/18

(54) **WINDOW GLASS STRUCTURE FOR VEHICLE**

(30) Priority: 10.10.2014 JP 2014208704
(71) Applicant: Nippon Sheet Glass Company, Limited, Tokyo 108-6321 (JP)
(72) Inventor: TOKIWA, Junichi, Tokyo 108-6321 (JP); SAKAI, Tsuneaki, Tokyo 108-6321 (JP)
(74) Representative: Webster, Jeremy Mark
(86) International application number: PCT/JP2015/072836
(87) International publication number: WO 2016/056302

(57) **Abstract**

A window glass structure according to one aspect of the present invention includes a window glass for a vehicle that has a surface provided with a conductive layer having a predetermined pattern, and a connection terminal that is soldered to the conductive layer. The connection terminal includes a first joining portion that is joined to the conductive layer by soldering using a lead-free solder, a first side plate that is linked to the first joining portion and extends in a direction of separation from the surface of the window glass, a second joining portion that is joined to the conductive layer by soldering using a lead-free solder, a second side plate that is linked to the second joining portion and extends in a direction of separation from the surface of the window glass, a bridge portion that extends so as to link the two side plates, and a terminal portion configured to be linked to the bridge portion so as to have a face that is oriented in a direction different from directions in which faces of the two side plates and the bridge portion are oriented, at a position separated from regions to which the first side plate and the second side plate are linked.

## Description

### Technical Field

The present invention relates to a window glass structure for a vehicle.

### Background Art

In some cases, a surface of a window glass for a vehicle (in particular, rear glass) that is attached to an automobile is provided with a conductive layer having a pattern for constituting a heating wire for removing condensation or heating a wiper so as to melt frost, an antenna for receiving predetermined radio waves, and the like. This conductive layer is formed by printing a conductive silver paste on the surface of the window glass and firing the paste, for example. Then, a metal connection terminal for connection with an external power source or an antenna circuit is soldered to this conductive layer.

For example, a connection terminal that is to be soldered onto a conductive layer having a pattern for constituting a heating wire for removing condensation is illustrated in Patent Literature 1. The connection terminal proposed in Patent Literature 1 includes a first region, a second region, and a terminal portion (a head portion) to which a feeding wire is attached.

The first region includes a first fixing portion that is fixed to the window glass by soldering, and a rising portion that is linked to the first fixing portion and extends upward from the first fixing portion. The terminal portion to which the feeding wire is attached is linked to the rising portion of the first region on the upper end side, and extends from this rising portion along the surface of the window glass.

On the other hand, the second region includes a second fixing portion that is disposed at a distance from the first fixing portion and is fixed to the window glass by soldering; an extension portion that rises from the second fixing portion, extends toward the rising portion of the first region, and extends substantially in parallel with the window glass; a bending portion that rises from the extension portion and is substantially parallel with the rising portion; and an abutting portion that extends from the bending portion and abuts against and is substantially parallel with the rising portion.

Here, the coefficient of thermal expansion of metal is greater than that of glass. Thus, if such a metal connection terminal is fixed to the surface of the window glass by soldering, the connection terminal relatively expands or contracts with respect to the window glass, and thus there is a possibility that the window glass will crack due to stress caused by this expansion or contraction.

To address this, in Patent Literature 1, a gap is provided between the rising portion that extends from the first fixing portion and the extension portion that extends from the second fixing portion. Thus, the difference in expansion amount between the connection terminal and the window glass can be absorbed by this gap, and accordingly, it is possible to prevent the window glass from cracking due to a difference in coefficient of thermal expansion between the connection terminal and the window glass.

### Citation List

### Patent Literature

Patent Literature 1: JP H07-335280A

### Summary of Invention

### Technical Problem

The inventors of the present invention found problems such as the following with the connection terminal illustrated in Patent Literature 1. That is, in the connection terminal illustrated in Patent Literature 1, the terminal portion to which the feeding wire is attached is directly linked to the rising portion that extends from the first fixing portion in a cross-sectionally linear manner. Therefore, for example, if a worker touches the terminal portion while carrying the window glass and the connection terminal is subjected to such an impact that the terminal portion is pulled upward, the impact applied to the terminal portion is transferred to the first fixing portion substantially directly as stress. This may cause mechanical breakdown in a boundary portion between the connection terminal and the surface of the window glass.

Note that conventionally, when soldering is performed on window glass, solder that contains lead (hereinafter, referred to as "lead-containing solder") is used. This lead-containing solder contains lead in a large amount, and thus is relatively soft even after solidification. Thus, even if the impact is applied to the terminal portion of the connection terminal, cohesive failure simply occurs in the soldered portion, and there is a low possibility that a crack will form on the surface of the window glass.

However, because lead is harmful to the human body and adversely influences the natural environment as waste, in recent years, instead of lead-containing solder, demand for facilitating usage of lead-free solder that hardly contains lead has been increasing. This lead-free solder is constituted by an alloy of tin, silver, and copper, and is harder than lead-containing solder.

Thus, if lead-free solder is used to solder the above-described connection terminal, the connection terminal and the surface of the window glass tightly bond together, cohesive failure is unlikely to occur in the soldered portion, and stress caused by the impact applied to the terminal portion is easily transferred to the window glass. Therefore, even if a relatively small impact is applied to the terminal portion of the connection terminal, a crack that detaches a region that has come into contact with the solder of the first fixing portion forms on the surface of the window glass in some cases. The inventors of the present invention found such problems.

One aspect of the present invention was made in view of such problems, and an object thereof is to provide a window glass structure with which a crack is unlikely to form on a surface of a window glass even if a load is received after a connection terminal is soldered to the window glass using lead-free solder.

### Solution to Problem

In order to resolve the above-described issues, the present invention adopts the following configurations.

That is, a window glass structure for a vehicle according to one aspect of the present invention includes a window glass for a vehicle that has a surface provided with a conductive layer having a predetermined pattern, and a connection terminal that is soldered to the conductive layer. Moreover, the connection terminal includes a first joining portion, at least a portion of which is joined to the conductive layer by soldering using a lead-free solder, a first side plate that is linked to the first joining portion and extends from the first joining portion in a direction of separation from the surface of the window glass, a second joining portion, at least a portion of which is joined to the conductive layer by soldering using a lead-free solder, a second side plate that is linked to the second joining portion and extends from the second joining portion in a direction of separation from the surface of the window glass, a bridge portion that extends so as to link the first side plate and the second side plate, and a terminal portion configured to be supported by being linked to the bridge portion so as to have a face that is oriented in a direction different from directions in which faces of the two side plates and the bridge portion are oriented, at a position separated from regions to which the first side plate and the second side plate are linked, the terminal portion being configured to be connected to wiring from a predetermined electric device.

In the window glass structure according to this configuration, the first joining portion and the second joining portion of the connection terminal are soldered to the surface of the window glass. A first side plate and a second side plate respectively extend from the first joining portion and the second joining portion, and a bridge portion is provided so as to link the first side plate and the second side plate. Moreover, the first side plate configured to be connected to the wiring from the predetermined electric device is supported so as to be linked to the bridge portion at a position separated from the regions to which the first side plate and the second side plate are linked.

Therefore, in the window glass structure according to this configuration, the terminal portion of the connection terminal is disposed at a distance from the first side plate and the second side plate, and thus an impact applied to the terminal portion is not directly transferred to the first joining portion and the second joining portion, and it is possible to prevent stress caused by the impact from easily acting on the window glass. Therefore, according to this configuration, it is possible to provide a window glass structure with which a crack is unlikely to form on the surface of the window glass even if a load is received after a connection terminal is soldered to the window glass using lead-free solder.

In addition, in the window glass structure according to this configuration, the terminal portion of the connection terminal has a face that is oriented in a direction different from directions in which faces of the two side plates and the bridge portion are oriented. Thus, the connection terminal has the terminal portion, the two side plates, and the bridge portion that have faces that are oriented in three directions. Therefore, the flat faces of the connection terminal can be configured to respectively correspond directions in real space (three dimensional) so as to easily handle impacts in the directions.

Also, as another mode of the window glass structure according to the above-described one aspect, the first side plate may be linked to an end portion of the first joining portion and may extend along a direction having an angle of 90 degrees or more with respect to the surface of the window glass, as the direction of separation from the surface of the window glass.

If the angle between the first side plate extending from the first joining portion and the surface of the window glass is less than 90 degrees, the solder that has been applied to the first joining portion easily extends around to the first side plate. If the solder easily extends around to the first side plate, a region that is relatively thick is formed on the solder that is applied to the surface of the window glass. Stress caused by thermal contraction of the solder easily acts on this thick region, and if the connection terminal is soldered to the window glass using lead-free solder, a crack easily forms on the surface of the window glass in this soldered region.

In contrast, according to this configuration, because the first side plate extends along a direction having an angle of 90 degrees or more with respect to the first joining portion, in the case where the first joining portion is soldered to the window glass, it is possible to prevent the solder from extending around to the first side plate. Thus, it is possible to make a crack unlikely to form on the surface of the window glass even if a load is applied to the connection terminal after the connection terminal is soldered to the window glass using the lead-free solder.

Also, as another mode of the window glass structure according to the above-described one aspect, the second side plate may be linked to an end portion of the second joining portion and may extend along a direction having an angle of 90 degrees or more with respect to the surface of the window glass, as the direction of separation from the surface of the window glass. According to this configuration, because the second side plate extends along a direction having an angle of 90 degrees or more with respect to the second joining portion, in the case where the second joining portion is soldered to the window glass, it is possible to prevent the solder from extending around to the second side plate. Thus, it is possible to make a crack unlikely to form on the surface of the window glass even if a load is applied to the connection terminal after the connection terminal is soldered to the window glass using the lead-free solder.

Also, as another mode of the window glass structure according to the above-described aspect, the connection terminal may further include an arm portion that is linked to a circumferential edge of the bridge portion and may extend in a direction of separation from the bridge portion. Moreover, the arm portion may be linked to the terminal portion at an end portion opposite to the end portion that is linked to the bridge portion, and the terminal portion may be linked to the bridge portion via the arm portion. According to this configuration, the terminal portion is linked to the bridge portion via the arm portion extending in a direction of separation from the bridge portion. Thus, it is possible to make the load applied to the terminal portion unlikely to be transferred to the bridge portion, and to make a crack unlikely to form on the surface of the window glass even if a load is applied to the connection terminal after the connection terminal is soldered to the window glass using the lead-free solder.

Also, as another mode of the window glass structure according to the above-described one aspect, the first side plate and the second side plate may be each formed into a flat plate shape, and flat faces of the first side plate and the second side plate may be each configured to be oriented in a first direction that is perpendicular to a direction perpendicular to the surface of the window glass. Furthermore, the bridge portion may be formed into a flat plate shape, and a flat face of the bridge portion may be configured to be oriented in the direction perpendicular to the surface of the window glass. Also, the terminal portion may be formed into a flat plate shape, and a flat face of the terminal portion may be configured to be oriented in a second direction that is perpendicular to the first direction and the direction perpendicular to the surface of the window glass. According to this configuration, the flat face of the connection terminal can be configured to be oriented in directions in real space (three dimensions). Thus, it is possible to provide a connection terminal that easily handles an impact in each direction.

Also, as another mode of the window glass structure according to the above-described first aspect, the bridge portion may be provided with a low strength region that is configured to partially have a low mechanical strength at at least one of a position between a position to which the terminal portion is linked and a position to which the first side plate is linked and a position between the position to which the terminal portion is linked and a position to which the second side plate is linked. According to this configuration, if a very strong impact acts on the terminal portion, the connection terminal can break at the low strength region of the bridge portion. Therefore, it is possible to enable the connection terminal to break and to make a crack unlikely to form on the surface of the window glass even if a very strong impact acts on the terminal portion of the connection terminal after the connection terminal is soldered to the window glass using the lead-free solder.

Also, according to this configuration, the low strength region is provided at at least one of a position between the position linked to the terminal portion and the position linked to the first side plate and a position between the position linked to the terminal portion and the position linked to the second side plate. Thus, even if the low strength region provided at either location is broken by an impact, it is possible to maintain the connection between the other side plate and the terminal portion, and to ensure conduction between a predetermined electric device and the conductive layer. Thus, this configuration makes it possible to ensure conductivity between the predetermined electric device and the conductive layer while making a crack unlikely to form on the surface of the window glass even if the connection terminal is soldered using the lead-free solder.

Also, as another mode of the window glass structure according to the above-described one aspect, the bridge portion may be formed into a flat plate shape, and the low strength region may have a mechanical strength lower than that of another region of the bridge portion due to the bridge portion partially having a narrow width due to a notch disposed at the circumferential edge of the bridge portion. According to this configuration, a connection terminal with which a crack is unlikely to form on a surface of a window glass can be provided with a very simple configuration.

Also, as another mode of the window glass structure according to the above-described one aspect, a thickness of the window glass may be less than or equal to 3.1 mm. If the thickness of the window glass is as thin as 3.1 mm or less, the rigidity of the window glass decreases, and thus if the impact acting on the connection terminal is relatively small, there is a high possibility that a crack will form in a portion in which the connection terminal is soldered to the window glass using the lead-free solder. Thus, it is very advantageous to use the above-described connection terminal in the window glass having a thickness of 3.1 mm or less.

Also, as another mode of the window glass structure according to the above-described one aspect, at least one of faces of the first joining portion and the second joining portion of the connection terminal that are joined to the conductive layer may be formed into a circular shape. If a corner is formed on the faces of the first joining portion and the second joining portion that are joined to the conductive layer, stress is easily applied to the soldered portion after the connection terminal is soldered with the lead-free solder. Thus, there is a possibility that a crack will form on the face of the window glass in the corner of the face that is joined to the conductive layer. In contrast, according to this configuration, a corner is not formed on at least one of the faces of the first joining portion and the second joining portion that are joined to the conductive layer. This makes it possible to prevent a crack from easily forming on the surface of the window glass.

In addition, when the connection terminal is attached to the surface of the window glass, the lead-free solder that is applied thereto extends due to being sandwiched between the faces of the joining portions and the surface of the window glass (the conductive layer) . Thus, if the lead-free solder is evenly applied to the faces of the joining portions or the surface of the window glass, the lead-free solder spreads out equally in each direction, that is, spreads out circularly. Therefore, forming the face that is joined to the conductive layer in at least one of the first joining portion and the second joining portion into a circular shape makes it possible to fully apply the lead-free solder with ease and suppress the amount of the lead-free solder that is wasted due to protrusion from the face that is joined to the conductive layer, or the like.

### Advantageous Effects of Invention

According to the present invention, it is possible to provide a window glass structure with which a crack is unlikely to form on a surface of a window glass even if a load is received after a connection terminal is soldered to the window glass using lead-free solder.

### Brief Description of Drawings

FIG. 1 illustrates a window glass structure according to an embodiment.
FIG. 2 is a side view illustrating a connection terminal according to the embodiment.
FIG. 3 is a top view illustrating the connection terminal according to the embodiment.
FIG. 4 is a side view illustrating the connection terminal according to another embodiment.
FIG. 5 is a top view illustrating the connection terminal according to another embodiment.
FIG. 6 is a side view illustrating the connection terminal according to another embodiment.
FIG. 7 is a side view illustrating the connection terminal according to another embodiment.
FIG. 8 is a side view illustrating the connection terminal according to another embodiment.

### Description of Embodiments

Hereinafter, an embodiment (also referred to as "present embodiment" hereinafter) according to one aspect of the present invention will be described based on the drawings. However, the present embodiment described hereinafter is merely an example of the present invention in all aspects. It will be appreciated that various improvement and modifications can be made without departing from the scope of the present invention. That is, a specific configuration corresponding to an embodiment may be adopted as appropriate to implement the present invention. Note that for convenience of illustration, the following description will be given using orientations in the drawings as the reference.

### §1 Window glass structure

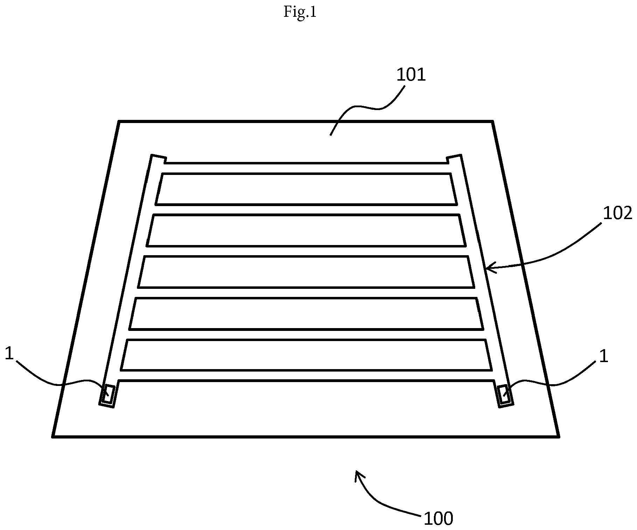

A window glass structure according to the present embodiment will be described below with reference to FIG. 1. FIG. 1 illustrates a window glass structure 100 according to the present embodiment. As illustrated in FIG. 1, the window glass structure 100 according to the present embodiment includes a window glass 101 for a vehicle, a conductive layer 102 that is formed on a surface of the window glass 101 and has a predetermined pattern, and a connection terminal 1 that is soldered to the window glass 101 via the conductive layer 102.

### Window glass

First, the window glass 101 will be described. As illustrated in FIG. 1, the window glass 101 according to the present embodiment is formed into a rectangular shape, and is attached to a window that is provided on the body of an automobile. Note that the window glass 101 illustrated in FIG. 1 is a rear glass, the pattern of the conductive layer 102 that is formed on the window glass 101 and will be described later is for a heating wire for removing condensation on the rear glass.

A known glass plate for an automobile can be used as the window glass 101. For example, heat-ray absorbing glass, general clear glass or green glass, or UV green glass may be used as the window glass 101. However, such a window glass 101 needs to realize a visible light transmittance conforming to the safety standards of the country in which the automobile is used. For example, adjustment can be performed such that solar absorptivity, visible light transmittance, and the like satisfy the safety standards. Hereinafter, one example of the composition of clear glass and one example of the composition of heat-ray absorbing glass are shown.

### Clear glass

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R represents an alkali metal)
Total iron oxide (T-Fe₂O₃) in terms of Fe₂O₃: 0.08 to 0.14 mass%

### Heat-ray absorbing glass

The composition of the heat-ray absorbing glass is based on the clear glass composition, and is obtained by setting, for example, the ratio of the total iron oxide (T-Fe₂O₃) in terms of Fe₂O₃ to 0.4 to 1.3 mass%, the ratio of CeO₂ to 0 to 2 mass%, and the ratio of TiO₂ to 0 to 0.5 mass%, and reducing the backbone components (mainly, SiO₂ and Al₂O₃) of the glass by the amount of increase in T-Fe₂O₃, CeO₂, and TiO₂.

Note that the type of window glass 101 is not limited to the clear glass or the heat-ray absorbing glass, and can be selected as appropriate in accordance with the embodiment. For example, the window glass 101 may be an acrylic-based, a polycarbonate-based resin window, or the like.

Also, there does not need to be any particular limitation on the thickness of the window glass 101 according to the present embodiment. However, from the viewpoint of reducing the weight, the thickness of the window glass 101 may be set in a range of 2.2 to 5.1 mm, in a range of 2.4 to 3.8 mm, or in a range of 2.7 to 3.2 mm. Furthermore, the thickness of the window glass 101 may be set to 3.1 mm or less.

### Conductive layer

Next, the conductive layer 102 formed on the surface of the window glass 101 will be described. The conductive layer 102 is formed on the surface of the window glass 101 that faces the inside of the automobile, and has a pattern for constituting a heating wire for removing condensation on the window glass 101, for example. This conductive layer 102 is formed by printing a conductive silver paste on the surface of the window glass 101 and firing the paste, for example. However, the material for the conductive layer 102 is not limited to this silver paste, and can be selected as appropriate in accordance with the embodiment.

The connection terminal 1, which will be described later, is soldered to this conductive layer 102, and the conductive layer 102 is connected to a power source (not shown) included in the automobile via this connection terminal 1. Also, an operation panel (not shown) that is provided in the automobile is configured to turn off/on the supply of electricity from the power source to the conductive layer 102.

Thus, a driver of the automobile can supply electricity from the power source to the conductive layer 102 by operating this operation panel. When electricity is supplied to the conductive layer 102, the conductive layer 102 is heated by the energy of the supplied electricity. This makes it possible to warm the window glass 101 in the portion in which the conductive layer 102 is formed and to remove condensation that is on the surface of the window glass 101.

### Connection terminal

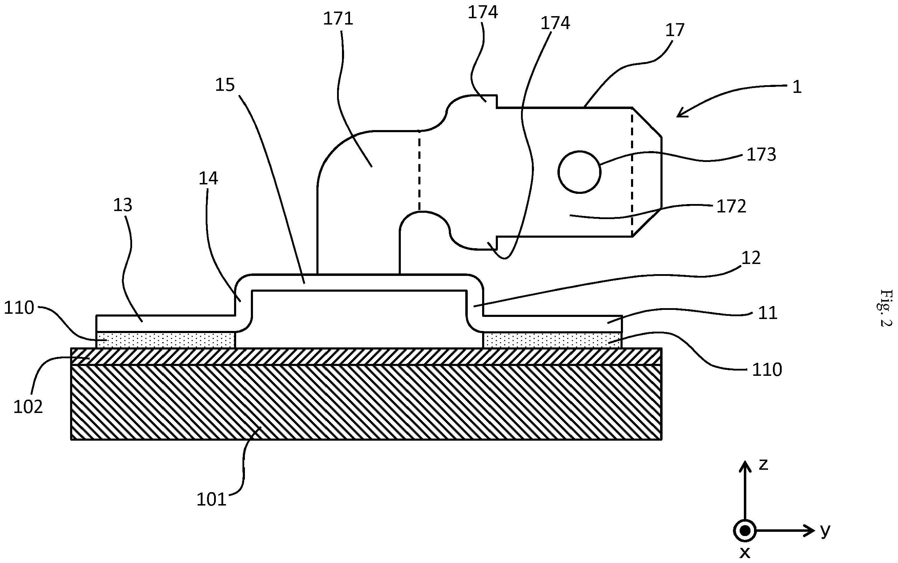

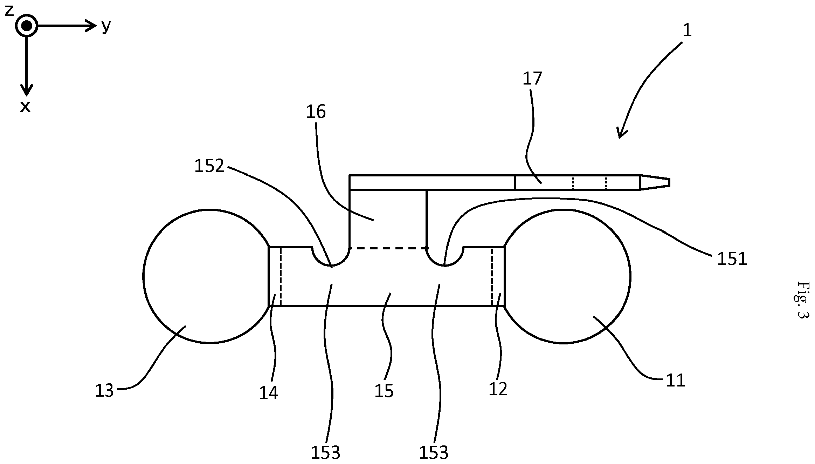

Next, the connection terminal 1 that is soldered to the surface of the window glass 101 via the above-described conductive layer 102 will be described with reference to FIGS. 2 and 3. FIG. 2 is a side view illustrating the connection terminal 1 according to the present embodiment. Also, FIG. 3 is a top view illustrating the connection terminal 1 according to the present embodiment.

Note that for convenience of illustration, the directions are illustrated using the x axis, the y axis, and the z axis in FIGS. 2 and 3. Hereinafter, the positive direction of the z axis is also referred to as "upper", and the negative direction of the z axis is also referred to as "lower". Also, the positive direction of the y axis is also referred to as "right", and the negative direction of the y axis is also referred to as "left". Furthermore, the positive direction of the x axis is also referred to as "front", and the negative direction of the x axis is also referred to as "rear".

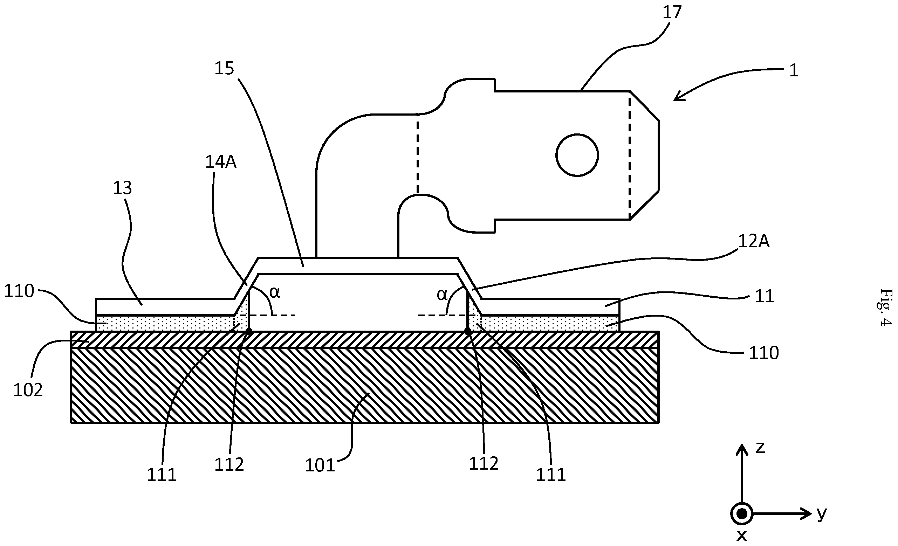

Here, describing each direction, the z axis direction corresponds to a direction perpendicular to the surface of the window glass 101, and the xy plane corresponds to a face horizontal to the surface of the window glass 101. Also, the y axis direction is a direction in which the flat faces of a first side plate 12 and a second side plate 14, which will be described later, are oriented, and the y axis direction corresponds to a first direction perpendicular to the z axis. Furthermore, the x axis direction is a direction in which the flat face of a terminal portion 17 that will be described later is oriented, and the x axis direction corresponds to a second direction that is perpendicular to the y axis direction and the z axis direction. Similar expressions will be also used in FIG. 4 that will be described later.

As illustrated in FIGS. 1 and 2, the connection terminal 1 according to the present embodiment is soldered to the window glass 101 via the conductive layer 102. The connection terminal 1 is attached to a region hidden in the automobile body, and if this window glass 101 is attached to a window provided in the body of the automobile, the region to which the connection terminal 1 is attached is configured to be hidden in the automobile body.

As illustrated in FIGS. 2 and 3, the connection terminal 1 according to the present embodiment includes the first joining portion 11 and the second joining portion 13 that are provided at a distance from each other in the y axis direction. The first joining portion 11 and the second joining portion 13 are each formed into a flat plate shape, and the flat faces of the first joining portion 11 and the second joining portion 13 are each formed into a circular shape. Accordingly, lower faces (flat faces on the lower side) of the first joining portion 11 and the second joining portion 13 each have a circular shape, the lower faces being joined to the surface (the conductive layer 102) of the window glass 101.

The lead-free solder 110 is applied to the conductive layer 102 formed on the surface of the window glass 101, and the lower faces of the first joining portion 11 and the second joining portion 13 are soldered to the surface of the window glass 101 by this lead-free solder 110. Accordingly, the connection terminal 1 according to the present embodiment is attached to the window glass 101.

Note that tin, silver, copper, zinc, bismuth, indium, and the like may be adopted as the material for this lead-free solder 110. For example, the composition of the lead-free solder 110 includes 90% or more of tin, and other metals such as silver and zinc. This lead-free solder may be referred to as non-lead solder.

If corners are formed on each lower face of the first joining portion 11 and the second joining portion 13, stress is easily applied to these corner portions after the connection terminal 1 is soldered with the lead-free solder 110. Therefore, there is a possibility that a crack will form on the surface of the window glass 101 in the corner portions of each lower face of the first joining portion 11 and the second joining portion 13. In contrast, in the present embodiment, the lower faces of the first joining portion 11 and the second joining portion 13 are each formed into a circular shape, and are configured such that corners are not formed. Therefore, it is possible to prevent a crack from easily forming on the surface of the window glass 101.

Moreover, when the connection terminal 1 is attached to the surface of the window glass 101, the lead-free solder 110 that is applied thereto extends by being sandwiched between the lower surfaces of the joining portions (11 and 13) and the surface of the window glass 101 (the conductive layer 102). Thus, if the lead-free solder 110 is evenly applied to the lower faces of the joining portions (11 and 13) or the surface of the window glass 101, the lead-free solder 110 spreads out equally in each direction, that is, spreads out circularly. Therefore, the lead-free solder 110 can be easily applied evenly by forming each of the lower faces of the first joining portion 11 and the second joining portion 13 into a circular shape, and it is possible to suppress the amount of the lead-free solder 110 that is wasted due to protrusion from each lower face.

The first side plate 12 extending upward (the positive direction of the z axis) is linked to a left end portion of the first joining portion 11. Similarly, the second side plate 14 extending upward (the positive direction of the z axis) is linked to a right end portion of the second joining portion 13. The first side plate 12 and the second side plate 14 are formed into a flat plate shape, and the flat faces of the first side plate 12 and the second side plate 14 are each formed into a rectangular shape. Moreover, the first side plate 12 and the second side plate 14 are disposed such that the flat faces thereof face each other, and the first side plate 12 and the second side plate 14 each extend along the z axis direction perpendicular to the surface of the window glass 101, the z axis direction being a direction of separation from the surface of the window glass 101. Accordingly, the flat faces of the first side plate 12 and the second side plate 14 are oriented in the y axis direction perpendicular to the z axis direction.

An upper end portion of the first side plate 12 and an upper end portion of the second side plate 14 are linked by the bridge portion 15. The bridge portion 15 is formed into a flat plate shape, and a flat face of the bridge portion 15 is formed into a rectangular shape. Moreover, the bridge portion 15 extends to fill the gap between the first joining portion 11 and the second joining portion 13.

Here, in the present embodiment, the length of the first side plate 12 (the length in the z axis direction) coincides with the length of the second side plate 14 (the length in the z axis direction). Therefore, the bridge portion 15 is configured to extend along the y axis direction, and have a flat face that is oriented in the z axis direction perpendicular to the surface of the window glass 101, and that is horizontal to the surface of the window glass 101.

As illustrated in FIG. 3, the first side plate 12 is linked to a right end side of the circumferential edge of the bridge portion 15. Also, the second side plate 14 is linked to a left end side. On the other hand, a flat plate-shaped arm portion 16 is linked to a rear end side of the circumferential edge of this bridge portion 15. The rear end side of the circumferential edge of this bridge portion 15 is one example of a position separated from regions to which the first side plate 12 and the second side plate 14 are linked.

The arm 16 is linked to the vicinity of a center in the y axis direction of the bridge portion 15, and is flush with the flat face of the bridge portion 15. This arm portion 16 extends in the negative direction of the x axis (rearward), the negative direction being a direction of separation from the bridge portion 15. Moreover, the terminal portion 17 is linked to the end portion of the arm portion 16 that is opposite to the end portion linked to the bridge portion 15.

As illustrated in FIG. 2, the terminal portion 17 is linked to the end portion of the arm portion 16, and accordingly, the terminal portion 17 is supported by the bridge portion 15 via the arm portion 16 at a position separated from the regions that are linked to the first side plate 12 and the second side plate 14. This terminal portion 17 is configured to be connected to wiring from a predetermined electric device.

In the present embodiment, the terminal portion 17 is formed into a flat plate shape, and the flat face of the terminal portion 17 is configured to be oriented in the x axis direction that is perpendicular to the z axis direction and the y axis direction that are perpendicular to the surface of the window glass. Specifically, the terminal portion 17 includes an extension portion 171 that extends upward from the end portion of the arm portion 16, and a connection portion 172 that connects the wiring from the predetermined electric device.

The extension portion 171 is configured to be formed into a flat plate shape, and to be linked to the end portion of the arm portion 16, and extend upward (in the positive direction of the z axis) from this arm portion 16. A flat face of the extension portion 171 is configured to be oriented in the x axis direction, and an upper end portion of the extension portion 171 curves so as to be oriented in the positive direction of the y axis. Moreover, the connection portion 172 extending rightward (the positive direction of the y axis) from this extension portion 171 is linked to the upper end portion of this extension portion 171.

The connection portion 172 linked to the extension portion 171 is formed into a flat plate shape, and is flush with the extension portion 171. A through hole 173 that passes through the flat face of the connection portion 172 in the x axis direction is provided at a slightly rightward portion in the vicinity of the center of the connection portion 172. An electric wire portion of the wiring from the predetermined electric device can be attached to and detached from this through hole 173.

Also, a pair of protrusions 174 are provided in the vertical direction of the circumferential edge of the connection portion 172. These protrusions 174 are configured to be locked to a connector of the wiring from the predetermined electric device. That is, the wiring from the predetermined electric device is provided with a female connector, and the connection portion 172 is configured to be a male connector that is connected to the female connector.

However, the connection portion 172 is not limited to such an example, and is formed in accordance with a connector that is provided in the wiring from the predetermined electric device to be connected, for example. Examples of the predetermined electric device include an external power source for supplying electricity to the conductive layer 102, and an antenna circuit for receiving predetermined electromagnetic waves. In the present embodiment, the conductive layer 102 forms the pattern for a heating wire for removing condensation on the window glass 101. Therefore, wiring from the power source from the power source for supplying electricity to this pattern is connected to the connection portion 172.

Note that this terminal portion 17 is linked to the bridge portion 15 via the arm portion 16. Thus, the position at which the terminal portion 17 is linked to the bridge portion 15 corresponds to a position at which the arm portion 16 is linked to the bridge portion 15. Here, a low strength region 153 that is configured to partially have a low mechanical strength due to a first semicircular notch 151 is provided in this bridge portion 15 between the position to which this terminal portion 17 is linked via the arm portion 16 and the position to which the first side plate 12 is linked. Similarly, a low strength region 153 that is configured to partially have a low mechanical strength due to a second semicircular notch 152 is provided between the position to which this terminal portion 17 is linked via the arm portion 16 and the position to which the second side plate 14 is linked.

The first notch 151 and the second notch 152 are disposed in rear end sides of the circumferential edge of the bridge portion 15. The low strength regions 153 are each a region in which the bridge portion 15 partially has a narrow width (the length in the x axis direction) due to these notches (151 and 152), and accordingly, have lower mechanical strength than that of other regions of the bridge portion 15. Thus, this connection terminal 1 is configured to be easily physically broken at these low strength regions 153.

A metal material obtained by plating tin on copper is used as the material for such a connection terminal 1, for example. Also, the connection terminal 1 is formed by stamping out a copper plate with a press die into a designated shape, subsequently bending the stamped copper plates with a metal mold, and then performing plating. Then, this connection terminal 1 is soldered to the window glass 101 by applying lead-free solder to the lower faces of the joining portions (11 and 13) and disposing the connection terminal 1 at a predetermined position on the conductive layer 102. However, there does not need to be any particular limitation on the material for the connection terminal 1, the processing method, and the soldering method, and they may be selected as appropriate in accordance with the embodiment.

### Characteristics

In the window glass structure 100 according to the present embodiment, the conductive layer 102 is formed on the surface of the window glass 101, and the connection terminal 1 is fixed onto this conductive layer 102 with the lead-free solder 110. Specifically, the lead-free solder 110 is applied between the lower faces of the first joining portion 11 and the second joining portion 13 and the conductive layer 102, and accordingly, the first joining portion 11 and the second joining portion 13 are fixed to the surface of the window glass 101 via the conductive layer 102.

The side plates (12 and 14) are linked to the joining portions (11 and 13) that are fixed to the surface of the window glass 101, and the side plates (12 and 14) extend from the joining portions (11 and 13) in the positive direction of the z axis. Moreover, the bridge portion 15 extends in the y axis direction so as to link the upper end portion of the first side plate 12 and the upper end portion of the second side plate 14, and the terminal portion 17 is supported by the bridge portion 15 by being linked to the bridge portion 15 via the arm portion 16.

Here, in the present embodiment, the first side plate 12 extending from the first joining portion 11 that is fixed to the surface of the window glass 101 is linked to the right end side of the bridge portion 15. Similarly, the second side plate 14 extending from the second joining portion 13 that is fixed to the surface of the window glass 101 is linked to the left end side of the bridge portion 15. In contrast, the terminal portion 17 is supported by the bridge portion 15 at a position separated from regions that are linked to the first side plate 12 and the second side plate 14 by being linked not to the left and right end sides of the bridge portion 15 but to the rear end side via the arm portion 16.

That is, in the present embodiment, the terminal portion 17 is not integrally linked to the first side plate 12 and the second side plate 14, and is disposed at a distance from the first side plate 12 and the second side plate 14. Thus, an impact applied to the terminal portion 17 is not directly transferred to the first side plate 12 and the second side plate 14, and it is possible to prevent stress caused by the impact from directly acting on the first joining portion 11 and the second joining portion 13.

Therefore, according to the present embodiment, it is possible to prevent the impact that is applied to the terminal portion 17 from directly acting on the first joining portion 11 and the second joining portion 13, and to suppress the magnitude of stress acting on the lead-free solder 110 that joins the first joining portion 11 and the second joining portion 13. That is, relatively large stress is unlikely to act on the portion of the lead-free solder 110, and it is possible to prevent large stress from acting on a region of the window glass 101 that is joined to the lead-free solder 110 via the conductive layer 102.

Thus, even if the connection terminal 1 is fixed to the window glass 101 with the lead-free solder 110 that is harder than lead-containing solder, it is possible to prevent the formation of such a crack that a portion of the surface of the window glass 101 is teared off with the impact applied to the terminal portion 17. That is, according to the present embodiment, it is possible to provide the connection terminal 1 with which a crack is unlikely to form on the surface of the window glass 101 even if a load is received after the connection terminal 1 is soldered to the window glass 101 with the lead-free solder 110.

Also, according to the present embodiment, the terminal portion 17 is supported by the bridge portion 15 via the arm portion 16 that is linked to the circumferential edge of the bridge portion 15 and extends in the negative direction of the x axis away from the bridge portion 15. Thus, it is possible to make the impact that is applied to the terminal portion 17 unlikely to be transferred to the bridge portion 15 by this arm portion 16. For example, in the case where the terminal portion 17 receives a downward impact (in the negative direction of the z axis), the arm portion 16 can undergo plastic deformation in portions that are linked to the bridge portion 15, and accordingly, the impact that has been applied to the terminal portion 17 can be made unlikely to be transferred to the bridge portion 15.

Thus, since the present embodiment is configured such that the impact that is applied to the terminal portion 17 is unlikely to be transferred to the bridge portion 15, it is possible to make a crack unlikely to form on the surface of the window glass 101 even if an impact is applied to the connection terminal 1 after the connection terminal 1 is soldered to the window glass 101 with the lead-free solder 110.

Also, according to the present embodiment, the flat faces of the side plates (12 and 14) extending from the joining portions (11 and 13) are oriented in the y axis direction. Moreover, the flat face of the bridge portion 15 that links the end portions of the two side plates (12 and 14) is oriented in the z axis direction, and the flat face of the terminal portion 17 extending from this bridge portion 15 via the arm portion 16 is oriented in the x axis direction. Thus, it is possible to provide the connection terminal 1 that easily handles an impact in each direction of real space (three dimensions).

For example, the flat face of the bridge portion 15 is oriented in the z axis direction, and the flat face of the terminal portion 17 is oriented in the x axis direction. Thus, the terminal portion 17 can undergo plastic deformation in the x axis direction at a portion at which the terminal portion 17 and the arm portion 16 is linked, in other words, at a boundary between the extension portion 171 and the arm portion 16. Therefore, if an impact in the x axis direction is applied to the terminal portion 17, this terminal portion 17 undergoes plastic deformation so as to release the impact in the x axis direction that has been applied to the terminal portion 17.

Also, for example, the flat faces of the joining portions (11 and 13) and the bridge portion 15 are oriented in the z axis direction, and the flat faces of the side plates (12 and 14) are oriented in the y axis direction. Thus, the side plates (12 and 14) can undergo plastic deformation in the y axis direction at portions at which the side plates (12 and 14) and the joining portions (11 and 13) are linked and portions at which the side plates (12 and 14) and the bridge portion 15 are linked. Therefore, if an impact in the y axis direction is applied to the terminal portion 17, the side plates (12 and 14) each undergo plastic deformation in the y axis direction so as to release the impact in the y axis direction that has been applied to the terminal portion 17.

Furthermore, for example, the flat face of the bridge portion 15 is oriented in the z axis direction, and if an impact in the z axis direction is applied to the terminal portion 17, the bridge portion 15 can undergo plastic deformation in the z axis direction. Therefore, if the impact in the z axis direction is applied to the terminal portion 17, the bridge portion 15 undergoes plastic deformation in the z axis direction so as to release the impact in the z axis direction that has been applied to the terminal portion 17.

Thus, this configuration makes it possible to release an impact in each direction in real space and make stress unlikely to act on the first joining portion 11 and the second joining portion 13. Therefore, it is possible to make a crack unlikely to form on the surface of the window glass 101 even if an impact is applied to the connection terminal 1 after the connection terminal 1 is soldered to the window glass 101 with the lead-free solder 110.

In this aspect, if the flat faces of the connection terminal 1 are oriented in either of two direction in real space and there is a direction in real space in which the flat faces of the connection terminal 1 are not oriented, it is not possible to release an impact, as described above, in the direction in real space in which the flat faces of the connection terminal 1 are not oriented. Thus, if the connection terminal 1 receives an impact in this direction, there is a possibility that a crack will form on the surface of the window glass 101 even if the impact is relatively small. For example, assume that the flat face of the terminal portion 17 is oriented in the y axis direction or the z axis direction, and the connection terminal 1 does not have a flat face that is oriented in the x axis direction. In this case, there is a possibility that an impact in the x axis direction cannot be released as described above, and a crack will form on the surface of the window glass 101 with a relatively small impact in the x axis direction. In contrast, according to the present embodiment, the connection terminal 1 is configured to have flat faces corresponding to the three directions constituting real space, and thus it is possible to make a crack unlikely to form on the surface of the window glass 101 even if an impact is applied to the connection terminal 1 after the connection terminal 1 is soldered to the window glass 101 with the lead-free solder 110.

Also, in the present embodiment, the terminal portion 17 is linked via the arm portion 16 to the vicinity of the center in the horizontal direction of the bridge portion 15. The first side plate 12 is linked to a right end side of the bridge portion 15, and the second side plate 14 is linked to a left end side of the bridge portion 15. Moreover, this bridge portion 15 is provided with the low strength region 153 that is configured to partially have a low mechanical strength, between the position of the vicinity of the center to which the terminal portion 17 is linked and the position of the right end to which the first side plate 12 is linked. Similarly, this bridge portion 15 is provided with the low strength region 153 between the position of the vicinity of the center to which the terminal portion 17 is linked and the position of the left end to which the second side plate 14 is linked.

The low strength regions 153 are each a region that partially has a narrow width due to the notches (151 and 152), and has a mechanical strength lower than that of the other regions of the bridge portion 15. That is, the low strength regions 153 are regions of the bridge portion 15 that easily physically break. Thus, the bridge portion 15 can break at the low strength regions 153 in the case where a very large impact acts on the terminal portion 17.

Therefore, it is possible to enable the connection terminal 1 to break at the bridge portion 15 even if a very large impact is applied to the connection terminal 1 after the connection terminal 1 is soldered to the window glass 101 with the lead-free solder 110, and to prevent stress from acting on the surface of the window glass 101. That is, according to this configuration, it is possible to make a crack unlikely to form on the surface of the window glass 101 even if an impact is applied to the connection terminal 1 after the connection terminal 1 is soldered to the window glass 101 with the lead-free solder 110.

Also, in the present embodiment, the low strength regions 153 are formed by the notches (151 and 152) that are disposed at a rear end side of the bridge portion 15. The notches (151 and 152) can be formed in a relatively simple step in which portions of the bridge portion 15 are cut away. Thus, according to the present embodiment, it is possible to provide the connection terminal 1 that has a very simple configuration and with which a crack is unlikely to form on the surface of the window glass 101 even if an impact is received. Note that the notches (151 and 152) are provided so as to be continuous with the end side of the arm portion 16. This makes it possible to make an impact that has been applied to the terminal portion 17 act on the low strength regions 153, and to make the bridge portion 15 easily break at the low strength regions 153.

Also, in the present embodiment, the thickness of the window glass 101 may be less than or equal to 3.1 mm. If the thickness of the window glass 101 is as thin as 3.1 mm or less, even relatively small stress from the lead-free solder 110 easily forms a crack on the surface of the window glass 101. However, the connection terminal 1 according to the present embodiment is configured to be unlikely to transfer the impact that has been applied to the terminal portion 17 to the first joining portion 11 and the second joining portion 13.

Thus, usage of the connection terminal 1 in such a thin window glass 101 makes it possible to prevent a crack from forming on the surface of the window glass 101 with the impact that has been applied to the terminal portion 17. That is, it is very advantageous to use this connection terminal 1 in the window glass 101 having a thickness of 3.1 mm or less.

### §2 Variations

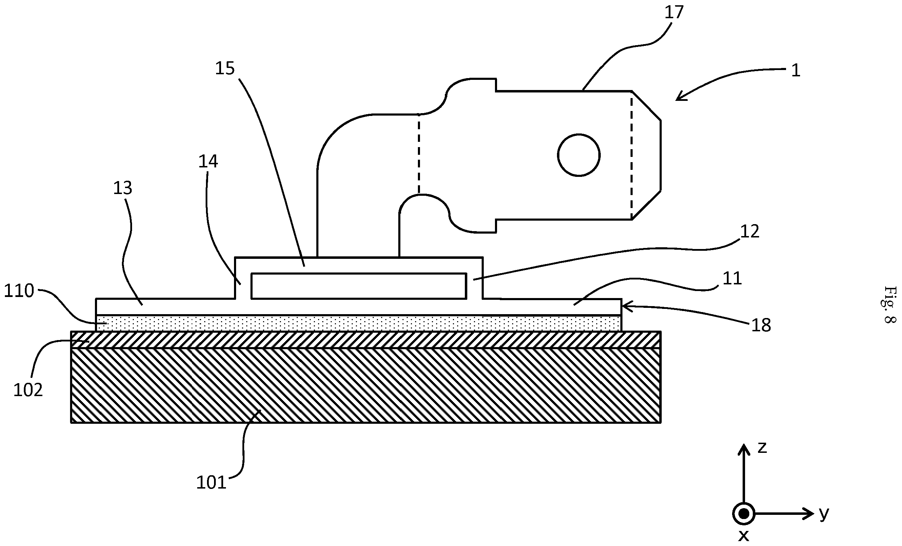

Although an embodiment of the present invention has been described in detail as described above, the above description is merely an example of the present invention in all aspects. It will be appreciated that various improvement and modifications can be made without departing from the scope of the present invention. Constituent elements may be omitted from, substituted, and added to the constituent elements of the above-described window glass structure 100 as appropriate in accordance with the embodiment. Also, the shape and size of each constituent element of the above-described window glass structure 100 may be determined as appropriate in accordance with the embodiment. For example, the following changes are possible. Note that with regard to constituent elements similar to those of the above-described embodiment, similar reference signs are used below and description is omitted as appropriate.
2.1 In the above-described embodiment, the rear glass provided with a heating wire for removing condensation was illustrated as the window glass 101 provided with the conductive layer 102 having a predetermined pattern. However, the window glass 101 to which the above-described connection terminal 1 is attached does not need to be limited to the rear glass, and can be widely applied to window glass provided with a conductive layer. Also, the predetermined pattern of the conductive layer 102 that is formed on the window glass 101 to which the above-described connection terminal 1 is attached is not limited to a heating wire for removing condensation, and can be selected as appropriate in accordance with the embodiment.
   For example, a heating wire for heating a wiper so as to melt frost may be formed on the surface of the window glass 101 as the predetermined pattern of the conductive layer 102. The heating wire for heating a wiper so as to melt frost is formed on a surface of a front glass in some cases, for example. In this case, the above-described connection terminal 1 may be soldered to the conductive layer formed on the surface of the front glass.
   Also, for example, an antenna for receiving predetermined radio waves may be formed on the surface of the window glass 101 as the predetermined pattern of the conductive layer 102. In this case, the terminal portion 17 of the connection terminal 1 is connected to an external antenna circuit, for example.
2.2 Also, in the above-described embodiment, the first side plate 12 and the second side plate 14 each extend along a direction (the z axis direction) perpendicular to the surface of the window glass 101. However, directions in which the first side plate 12 and the second side plate 14 extend may be selected as appropriate in accordance with the embodiment. For example, as illustrated in FIG. 4, the first side plate 12 and the second side plate 14 may each extend with an inclination from the z axis direction.
   FIG. 4 is a side view illustrating a connection terminal 1A according to the present variation. As illustrated in FIG. 4, side plates (12A and 14A) of the connection terminal 1A according to the present variation extend along directions with an angle of less than 90 degrees with respect to the surface of the window glass 101 (an angle α<90 degrees in FIG. 4). In this manner, the side plates (12A and 14A) of the connection terminal 1A may be inclined in the y axis direction. However, if the side plates (11 and 13) extend in directions with an angle of less than 90 degrees with respect to the surface of the window glass 101, there is a possibility that the lead-free solder 110 that joins the side plates (11 and 13) to the window glass 101 will be drawn to the flat faces of the side plates (12A and 14A) and extend around to the side plates (12A and 14A).
   If the lead-free solder 110 extends around to the side plates (12A and 14A), extension regions 111 having a thickness (the length in the z axis direction) thicker than regions abutting against the joining portions (11 and 13) will be formed. If these extension regions 111 are formed, the regions in which the lead-free solder 110 and the surface of the window glass 101 are in contact with each other increase in size, and stress caused by thermal contraction of the solder easily acts on the surface of the window glass 101. Specifically, stress easily acts at end portions 112 of the extension regions 111, and accordingly, even in the case where a relatively small impact is merely applied to the terminal portion 17, there is an increased risk that a crack will form on the surface of the window glass 101 at the portions that are in contact with these end portions 112.
   Thus, it is preferable that the first side plate 12 and the second side plate 14 extend along directions with an angle of 90 degrees or more with respect to the surface of the window glass 101. For example, as the above-described embodiment, it is preferable that the first side plate 12 and the second side plate 14 extend along the z axis direction perpendicular to the surface of the window glass 101. This makes it possible to prevent the formation of the above-described extension regions 111 and to make a crack unlikely to form on the surface of the window glass 101.
   Note that a configuration is possible in which either one of the first side plate 12 and the second side plate 14 extends along the z axis direction. This makes it possible to prevent the formation of the extension region 111 at either one of the first side plate 12 and the second side plate 14, and to make a crack unlikely to form on the surface of the window glass 101. Also, the inclination angle of the first side plate 12 does not need to coincide with the inclination angle of the second side plate 14.
2.3 Two notches, namely, the first notch 151 and the second notch 152, are formed in the bridge portion 15 according to the above-described embodiment, and the two low strength regions 153 are provided. However, either one of the two notches formed in the bridge portion 15 may be omitted so as to omit either one of the two low strength regions 153.
   That is, the bridge portion 15 may be provided with the low strength region 153 between the position to which the terminal portion 17 is linked and the position to which the first side plate 12 is linked, or between the position to which the terminal portion 17 is linked and the position to which the second side plate 14 is linked. In this manner, if the low strength region 153 is provided at only one location, even if the connection terminal 1 is broken at this low strength region 153 by a strong impact being applied to the terminal portion 17, it is possible to maintain the conduction between a predetermined electric device and the conductive layer 102.
   For example, if the first notch 151 is formed and the second notch 152 is omitted from the above-described bridge portion 15, the low strength region 153 is formed only between the position to which the terminal portion 17 is linked and the position to which the first side plate 12 is linked. In this case, if the connection terminal 1 is broken at this low strength region 153 by a strong impact being applied to the terminal portion 17, the bridge portion 15 is separated between the position to which the terminal portion 17 is linked and the position to which the first side plate 12 is linked, and a path from the terminal portion 17 to the first joining portion 11 is disconnected.
   However, the bridge portion 15 is not separated between the position to which the terminal portion 17 is linked and the position to which the second side plate 14 is linked, and a path from the terminal portion 17 to the second joining portion 13 is not disconnected, and thus it is possible to maintain the conduction between a predetermined electric device and the conductive layer 102. The same applies to the case where the low strength region 153 is formed only between the position to which the terminal portion 17 is linked and the position to which the second side plate 14 is linked. Note that in a case where the connection terminal 1 does not break in the bridge portion 15 in this manner, the two low strength regions 153 maybe omitted by omitting the two notches (151 and 152) in the above-described connection terminal 1.
2.4 Also, in the above-described embodiment, the low strength regions 153 are formed by the notches (151 and 152). However, a method for forming the low strength region 153 that has a mechanical strength lower than that of the other regions of the bridge portion 15 is not limited to a method with such a notch, and can be selected as appropriate in accordance with the embodiment. For example, the low strength region 153 can be formed by reducing the thickness (the length in the z axis direction).
2.5 Also, in the above-described embodiment, the terminal portion 17 is linked to the vicinity of the center in the y axis direction of the bridge portion 15 via the arm portion 16. However, the position at which the terminal portion 17 is linked to the bridge portion 15 does not need to be limited to such an example, and can be selected as appropriate in accordance with the embodiment within such a range that the terminal portion 17 is not integrated with the first side plate 12 or the second side plate 14. That is, the terminal portion 17 need only be disposed to be linked to the bridge portion 15 at a position separated from the regions to which the first side plate 12 and the second side plate 14 are linked. For example, as illustrated in FIG. 3, the bridge portion 15 is formed into a rectangular shape, and the side plates (12 and 14) are linked to end sides in the horizontal direction of the bridge portion 15. Therefore, the terminal portion 17 may be linked to any position as long as it is on either end side in the front-rear direction of this bridge portion 15. Note that the flat face of this terminal portion 17 is configured to be oriented in a direction different from those in which the flat faces of the two side plates (12 and 14) and the flat face of the bridge portion 15 are oriented.
2.6 Also, in the above-described embodiment, the arm portion 16 extends along the x axis direction as a direction of separation from the bridge portion 15. However, the direction in which the arm portion 16 extends does not need to be limited to such an example, and may be selected as appropriate in accordance with the embodiment. This arm portion 16 is provided such that the terminal portion 17 is separated from the first joining portion 11 and the second joining portion 13 that are joined to the window glass 101. This makes it possible to make the impact applied to the terminal portion 17 unlikely to be transferred to the first joining portion 11 and the second joining portion 13, and to make a crack unlikely to form on the surface of the window glass 101 even if an impact is applied to the connection terminal 1 (the terminal portion 17) after the connection terminal 1 is fixed with lead-free solder.
2.7 Also, in the above-described embodiment, the flat faces of the first joining portion 11 and the second joining portion 13 are each formed into a circular shape. However, the shapes of the flat faces of the first joining portion 11 and the second joining portion 13 may be selected as appropriate in accordance with the embodiment. Also, the shapes of the first joining portion 11 and the second joining portion 13 may be different from each other.

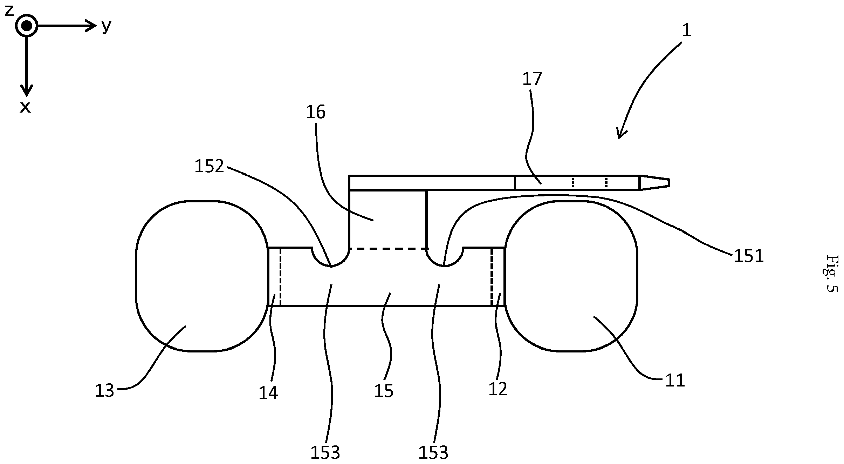

   FIG. 5 illustrates the shapes of the flat faces of the first joining portion 11 and the second joining portion 13 according to the present variation. As illustrated in FIG. 5, the flat faces of the first joining portion 11 and the second joining portion 13, in particular, the lower face that is joined to the surface of the window glass 101 (the conductive layer 102) may be formed into a rectangular shape having corners R. This makes it possible to prevent the concentration of stress on the corners of the flat faces of the first joining portion 11 and the second joining portion 13. In addition, the flat faces of the first joining portion 11 and the second joining portion 13 may be formed into an elliptical shape.
   Note that unevenness such as a mesh pattern may be formed on the lower faces of the first joining portion 11 and the second joining portion 13, in other words, on the faces of the joining portions (11 and 13) that are soldered. The wider the areas of the faces of the joining portions (11 and 13) that are soldered are, the more easily stress is concentrated on these soldering portions, and thus there is an increasing possibility that the window glass 101 will crack at the joining portions (11 and 13) . In contrast, the formation of this unevenness on the faces that are soldered makes it possible to prevent the entire face of each of the joining portions (11 and 13) from being fixed to the window glass 101. That is, it is possible to suppress the areas of the portions of the joining portions (11 and 13) that are soldered to the window glass 101, and thus to suppress a possibility that the window glass 101 will crack.
2.8 Also, in the above-described embodiment, the lead-free solder is applied to the entire lower face of each of the first joining portion 11 and the second joining portion 13. However, regions to which the lead-free solder is applied are not limited to such an example, and may be set as appropriate in accordance with the embodiment.

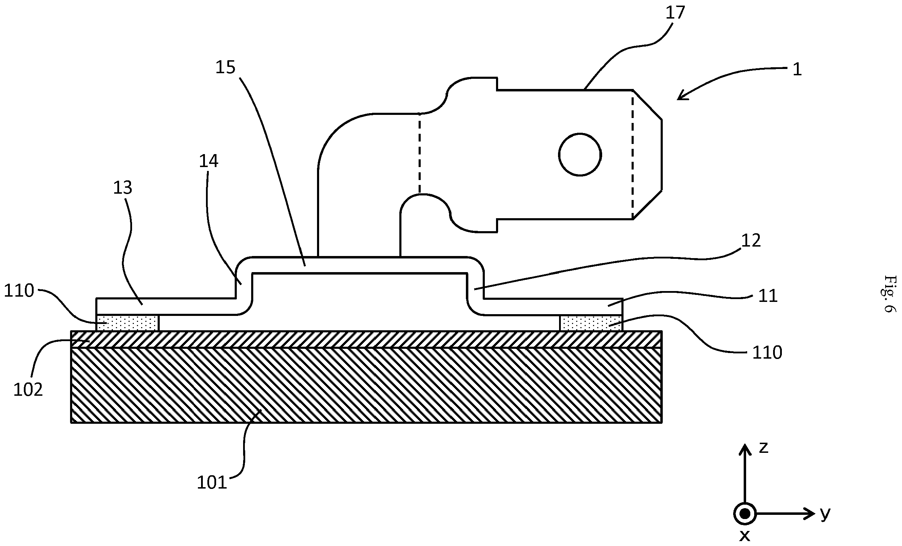

   FIG. 6 illustrates regions to which the lead-free solder according to the present variation is applied. As illustrated in FIG. 6, the lead-free solder may be applied to portions of the lower faces of the first joining portion 11 and the second joining portion 13. That is, at least parts of the joining portions (11 and 13) may be configured to be soldered to the conductive layer 102.
2.9 Also, in the above-described embodiment, the bridge portion 15 is linked to upper end portions (upper ends) of the side plates (12 and 14). However, the positions to which the bridge portion 15 is linked are not limited to such examples, and may be set as appropriate in accordance with the embodiment.

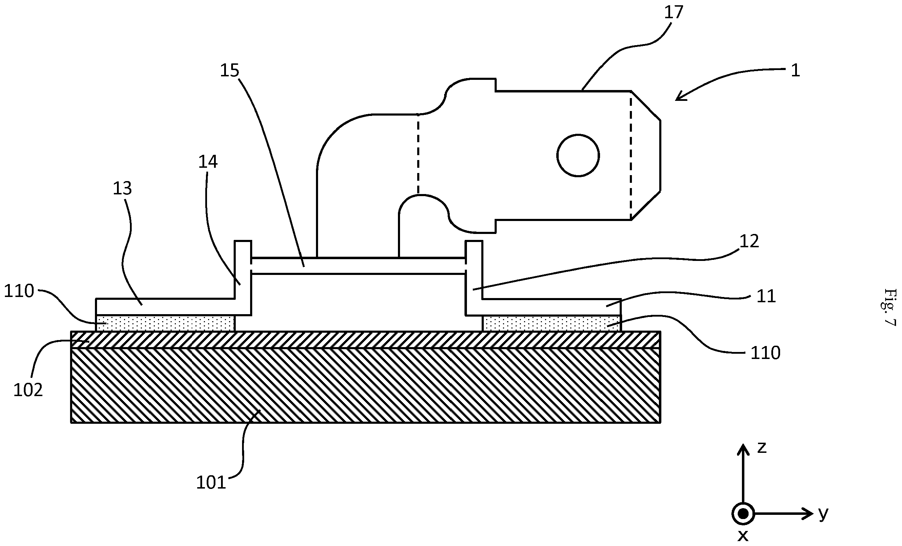

   FIG. 7 illustrates positions to which the bridge portion 15 according to the present variation is linked. As illustrated in FIG. 6, the bridge portion 15 may be linked not to the upper ends of the side plates (12 and 14), but to the vicinities of midslopes of the side plates (12 and 14).
2.10 Also, in the above-described embodiment, the first joining portion 11 and the second joining portion 13 are provided at a distance from each other. However, the first joining portion 11 and the second joining portion 13 does not need to be at a distance from each other, and as illustrated in FIG. 8, the first joining portion 11 and the second joining portion 13 may be linked to each other and integrally formed. Note that in this case, as illustrated in FIG. 8, one right-side region of a base portion 18 corresponds to the first joining portion 11, and one left-side region of the base portion 18 corresponds to the second joining portion 13.

### Reference Signs List

- 1: Connection terminal
- 11: First joining portion
- 12: First side plate
- 13: Second joining portion
- 14: Second side plate
- 15: Bridge portion
- 151: First notch
- 152: Second notch
- 153: Low strength region
- 16: Arm portion
- 17: Terminal portion
- 171: Extension portion
- 172: Connection portion
- 173: Through hole
- 174: Protrusion
- 100: Window glass structure
- 101: Window glass (for vehicle)
- 102: Conductive layer
- 110: Lead-free solder
- 111: Extension region
- 112: End portion
- 18: Base portion

## Claims

1. A window glass structure for a vehicle, comprising:
a window glass for a vehicle that has a surface provided with a conductive layer having a predetermined pattern; and
a connection terminal that is soldered to the conductive layer,
wherein the connection terminal includes:
a first joining portion, at least a portion of which is joined to the conductive layer by soldering using a lead-free solder;
a first side plate that is linked to the first joining portion and extends from the first joining portion in a direction of separation from the surface of the window glass;
a second joining portion, at least a portion of which is joined to the conductive layer by soldering using a lead-free solder;
a second side plate that is linked to the second joining portion and extends from the second joining portion in a direction of separation from the surface of the window glass;
a bridge portion that extends so as to link the first side plate and the second side plate; and
a terminal portion configured to be supported by being linked to the bridge portion so as to have a face that is oriented in a direction different from directions in which faces of the two side plates and the bridge portion are oriented, at a position separated from regions to which the first side plate and the second side plate are linked, the terminal portion being configured to be connected to wiring from a predetermined electric device.

2. The window glass structure according to claim 1, wherein
the first side plate is linked to an end portion of the first joining portion and extends along a direction having an angle of 90 degrees or more with respect to the surface of the window glass, as the direction of separation from the surface of the window glass.

3. The window glass structure according to claim 1 or 2, wherein
the second side plate is linked to an end portion of the second joining portion and extends along a direction having an angle of 90 degrees or more with respect to the surface of the window glass, as the direction of separation from the surface of the window glass.

4. The window glass structure according to any one of claims 1 to 3, wherein
the connection terminal further includes an arm portion that is linked to a circumferential edge of the bridge portion and extends in a direction of separation from the bridge portion,
the arm portion is linked to the terminal portion at an end portion opposite to the end portion that is linked to the bridge portion, and
the terminal portion is linked to the bridge portion via the arm portion.

5. The window glass structure according to any one of claims 1 to 4, wherein
the first side plate and the second side plate are each formed into a flat plate shape,
flat faces of the first side plate and the second side plate are each configured to be oriented in a first direction perpendicular to a direction that is perpendicular to the surface of the window glass,
the bridge portion is formed into a flat plate shape,
a flat face of the bridge portion is configured to be oriented in a direction perpendicular to the surface of the window glass,
the terminal portion is formed into a flat plate shape, and
a flat face of the terminal portion is configured to be oriented in a second direction that is perpendicular to the first direction and the direction perpendicular to the surface of the window glass.

6. The window glass structure according to any one of claims 1 to 5, wherein
the bridge portion is provided with a low strength region that is configured to partially have a low mechanical strength at at least one of a position between a position to which the terminal portion is linked and a position to which the first side plate is linked and a position between the position to which the terminal portion is linked and a position to which the second side plate is linked.

7. The window glass structure according to claim 6, wherein
the bridge portion is formed into a flat plate shape, and
the low strength region has a mechanical strength lower than that of another region of the bridge portion due to the bridge portion partially having a narrow width due to a notch disposed at the circumferential edge of the bridge portion.

8. The window glass structure according to any one of claims 1 to 7, wherein
a thickness of the window glass is less than or equal to 3.1 mm.

9. The window glass structure according to any one of claims 1 to 8, wherein
at least one of faces of the first joining portion and the second joining portion of the connection terminal that are joined to the conductive layer is formed into a circular shape.
